# FASCICULE DE BREVET EUROPEEN

(11) **EP 1 728 429 B1**
(45) Date de publication et mention de la délivrance du brevet: **15.07.2009**
(21) Numéro de dépôt: 06290846.2
(22) Date de dépôt: 24.05.2006
(51) Int. Cl.: A01N 47/20, A01N 31/16

(54) **Procédé de traitement antigerminatif et/ou biocide de bulbes ou tubercules au moyen de CIPC et d'un terpène ou d'une huile terpénique**
Verfahren zur keimungshemmenden Behandlung von Knollen oder Zwiebeln mittels CIPCs und Terpenen oder Terpenölen
Process for anti-germination treatment of bulbs and tubers using CIPC and terpenes or terpene oils

(30) Priorité: 02.06.2005 FR 0505600
(43) Date de publication de la demande: 06.12.2006
(73) Titulaire: XEDA INTERNATIONAL, 13670 Saint-Andiol (FR)
(72) Inventeur: Sardo, Alberto, 13160 Chateaurenard (FR)
(74) Mandataire: Colombet, Alain André

(56) Documents cités:
- WO-A-00/32054
- WO-A-95/12311
- WO-A-98/52414
- WO-A-20/05067718
- FR-A- 2 778 065

## Description

La présente invention concerne un procédé de traitement antigerminatif et/ou biocide des bulbes et tubercules au moyen de CIPC et d'un ou plusieurs terpènes ou huiles terpéniques. Ce procédé est particulièrement approprié pour le traitement des tubercules de pommes de terre.

Après la récolte des pommes de terre ou autres tubercules, celles-ci sont conservées à des températures de l'ordre de 20° à 30°C pendant environ dix jours afin de durcir leur couche péridermique (ou "peau"), puis progressivement refroidies jusqu'à leur température de conservation qui est d'environ 10°C.

Pendant les premier et deuxième mois suivant leur récolte, les tubercules restent à l'état de repos et présentent peu de tendances à la germination.

Cependant, avant la fin de cette période, les tubercules doivent être traités chimiquement afin d'inhiber la germination qui serait responsable d'effets néfastes, tels qu'une perte de poids, une conservation de l'amidon en sucre et une diminution de la qualité des tubercules ainsi qu'une détérioration de leur apparence. En outre, les germes ainsi que les tissus avoisinants contiennent des taux élevés de glycoalcaloïdes toxiques qui ne sont pas détruits au cours de la cuisson.

Les procédés de traitement antigerminatif les plus utilisés mettent en oeuvre des agents chimiques tels que le chloropropham, également dénommé chlorpropham, CIPC ou 3-chlorophénylisopropylcarbamate. En général, le CIPC est appliqué aux tubercules stockés au moyen de techniques de thermonébulisation. Généralement, la thermonébulisation met en oeuvre l'application de CIPC au moyen d'un courant d'air chaud afin de produire un aérosol.

Selon une première pratique, la thermonébulisation est effectuée au moyen de CIPC pur. Cependant, cette technique entraîne l'application de la matière active pure, de façon non satisfaisante sur les tubercules. En effet, le CIPC a tendance à former des cristaux et/ou ne se répartit pas uniformément sur les tubercules.

Selon une autre pratique, le CIPC est formulé en milieu solvant, tel que le chlorure de méthylène ou l'alcool méthylique. Là encore, cette technique ne donne pas de résultats satisfaisants dans la mesure où les solvants habituellement utilisés présentent des points d'ébullition faibles et ont tendance à s'évaporer rapidement lors de la thermonébulisation. Ceci aboutit à l'application de matière active pure présentant les mêmes inconvénients que la technique précédente.

Par ailleurs, le CIPC est difficilement soluble dans les solvants classiques, et des concentrations maximales de CIPC de l'ordre de 30 % (poids/volume) sont en général obtenues. Au mieux, des concentrations de l'ordre d'environ 54 % à 180°C ont été obtenues. Cette faible solubilité implique donc l'utilisation de quantités importantes de solvant et/ou de formulation afin d'obtenir les quantités de formule active requises. Or, on cherche en général à limiter l'utilisation de ces solvants du fait de leur toxicité propre et/ou du danger d'utilisation qu'ils impliquent, notamment du fait de leurs bas points d'ébullition qui entraînent des risques importants d'inflammabilité.

L'utilisation de dérivés synthétiques pour l'application des fruits et légumes durant leur croissance ou stockage est limitée. En particulier, les taux du CIPC font l'objet de régulations de plus en plus sévères. Par conséquent, alors que le CIPC est utilisé pour limiter la formation de germes sur les tubercules, sa toxicité pourrait remettre son utilisation aux doses habituelles en question. Par conséquent, on cherche à limiter au minimum la quantité de CIPC à appliquer aux bulbes et tubercules.

Enfin, les formulations disponibles de CIPC présentent une mauvaise stabilité, surtout à basse température, ce qui les rend impropres au stockage, notamment dans les chambres froides de stockage des bulbes et/ou tubercules.

Il a été tenté d'appliquer le CIPC avec des composés terpéniques pour inhiber les germes de pommes de terre; plus précisément, le document US 5,811,372 concerne une méthode d'inhibition des germes de tubercules comprenant l'application de CIPC et de carvone. Néanmoins, les 2 agents sont mélangés dans la composition à appliquer. En outre, dans le même brevet, il est précisé que la combinaison de CIPC avec des dérivés similaires (limonène ou jasmone) ne produit pas de résultats positifs. Par ailleurs, l'action de la carvone sur l'applicabilité et la répartition du CIPC n'est aucunement suggérée. Enfin, il n'est pas fait mention de concentration de CIPC supérieures à celles du terpène.

Il a maintenant été découvert, et c'est l'un des objets de la présente invention, que les terpènes et/ou huiles terpéniques, choisis parmi l'eugénol, l'isoeugénol ou l'huile de girofle, ont un haut pouvoir solvant du CIPC, et ce même en cas d'applications séparées des deux agents. En particulier, l'utilisation de tels terpènes et/ou huiles terpéniques appliqués avant ou après le CIPC permet une meilleure répartition du CIPC sur les pommes de terre. L'application séparée du terpène ou huile terpénique permet donc une meilleure application et par voie de conséquence pénétration et efficacité du CIPC. Il est ainsi possible d'atteindre des concentrations de CIPC supérieures à 50% en poids de CIPC par rapport au volume total de la solution, à température ambiante, voire des températures aussi basses que 0°C. Par conséquent, le procédé de la présente invention permet de limiter la quantité de produit formulé à utiliser.

Il a également été découvert que le pouvoir solvant d'un agent terpènique est également réalisé lorsque le CIPC est sous forme « sèche », c'est-à-dire lorsque le CIPC a été ou est appliqué ultérieurement sous forme pure et qu'il se dépose sous forme de cristaux ou sous forme de solution et que le solvant est évaporé, lors de l'application ou une fois déposé sur bulbe ou tubercule.

D'autre part, le procédé selon l'invention met en oeuvre des terpènes ou huiles terpéniques à température d'ébullition élevée, de préférence supérieure à 230°C, encore plus préférentiellement supérieure à 240°C. Ainsi, cette température d'ébullition élevée permet d'effectuer la thermonébulisation à plus haute température, assurant un meilleur brouillard et donc une meilleure répartition sur les bulbes et/ou tubercules traités. Aussi, le composé terpénique ou l'huile ne se dégrade pas ou peu et/ou forme un brouillard de bonne qualité lors de la thermonébulisation, permettant ainsi une meilleure répartition sur le tubercule traité.

Par ailleurs, ces points d'ébullition élevés permettent ainsi de réduire le risque d'inflammabilité par rapport aux solvants classiques généralement utilisés dans les formulations de ClPC, où les solvants seraient totalement vaporisés.

Les terpènes et/ou huiles terpéniques présentent une activité biocide propre contre les champignons et bactéries qui attaquent la pomme de terre. lls permettent donc d'améliorer les propriétés des formulations de CIPC.
Enfin, l'utilisation desdits terpènes et/ou huiles terpéniques avant ou après le CIPC potentialise l'effet antigerminatif des formulations de ClPC.

Selon un premier objet, la présente invention concerne un procédé de traitement antigerminatif et/ou biocide des bulbes ou tubercules, notamment de pommes de terre, comprenant l'application successive de ClPC et d'un terpène ou huile terpénique ou inversement, choisis parmi l'eugénol ou l'isoeugénol ou un de leurs sels ou mélange ou l'huile de girofle. De préférence, le rapport de la quantité de GIPC/terpéne ou huile terpénique est compris entre 0,5 et 3, plus préférentiellement de plus de 1 à 3 et encore plus préférentiellement entre 1,5 et 2,5.
Selon un autre aspect préféré, le ClPC et l'huile ou le terpène peuvent être appliqués sous forme de solution. Généralement, le ClPC est appliqué sous forme de solution de 10 à 100 %, de préférence de 20 à 50%. Selon un aspect particulier de la présente invention, le CIPC est appliqué sous forme pure. Lesdites solutions peuvent contenir un ou plusieurs émulsifiants, plus préférentiellement un émulsifiant non ionique. Généralement lesdites-solutions contiennent de 0 à 20 % en poids d'émulsifiant.
Dans ce qui précède et ce qui suit, les pourcentages sont en poids/volume par rapport au volume total de la composition.

Selon un autre objet, la présente invention concerne également l'utilisation d'un terpène et/ou huile terpénique choisis parmi l'eugénol ou l'isoeugénol ou un de leurs sels ou mélange ou l'huile de girofle, pour améliorer la pénétration du CIPC sur des bulbes ou tubercules.

De préférence, l'agent terpénique est appliqué après le ClPC. Selon un aspect préféré, le CIPC se présente sous forme de résidu, c'est-à-dire sous forme sèche lors de l'application de l'agent terpènique ; ceci est notamment le cas lorsque le CIPC a été appliqué sous forme pure ou sous forme de solution et que le solvant s'est évaporé.

Néanmoins, le CIPC peut également être appliqué après l'agent terpénique. Dans ce cas, le CIPC est de préférence appliqué avant séchage ou évaporation de l'agent terpénique appliqué sur le bulbe ou tubercule.

Dans tous les cas, l'application du second agent a lieu immédiatement après et jusqu'à 30 jours après celle du premier agent. Plus préférentiellement, le second agent est appliqué entre 1 minute et 5 jours après l'application du premier.

Selon la présente invention, on préfère plus particulièrement l'eugénol.

Selon l'invention, on entend par "huile terpénique" les huiles naturelles dont les terpènes sont extraits. On préfère plus particulièrement l'huile de girofle.

Les terpènes selon l'invention comprennent également les sels de terpènes et/ou leurs mélanges. Des sels particulièrement préférés sont notamment les sels de métaux alcalins, tels que les sels de sodium, les sels de lithium et les sels de potassium.

Selon un mode de réalisation particulièrement préféré, le terpène est sous forme de sel ou d'un mélange de sels acceptable sur le plan alimentaire. Dans ce cas, en effet, on observe une plus faible volatilité du terpène. De cette façon, la durée de protection des tubercules et bulbes après application de la solution selon l'invention se trouve prolongée.

Le terme « agent terpénique » fait référence audit terpène, huile ou leurs sels.

Le terme « agent selon l'invention » fait référence au CIPC et à l'agent terpénique.

Selon la présente invention, on entend par "émulsifiant" tout type d'agent habituellement utilisé à cet effet, tels que les alcools gras éthoxylés, les acides gras éthoxylés, les alkylphénols éthoxylés ou tout autre produit non ionique.

Les agents selon l'invention peuvent être appliquées sur les tubercules et bulbes en utilisant l'une quelconque des méthodes connues dans la technique, notamment par brossage, immersion, aspersion, atomisation, douchage ou thermonébulisation. De préférence, les agents sont appliqués par thermonébulisation, à température comprise entre 180 et 350°C, plus préférentiellement entre 230° et 250°C. Cette technique est connue en soi.

L'application peut être continue ou intermittente au cours de la durée du stockage.

De préférence, l'application est répétée dans l'énceinte de stockage tous les deux mois environ.

Bien entendu, on peut ajouter aux agents selon l'invention un ou plusieurs agents réduisant l'évaporation du principe actif. De tels agents sont connus dans la technique et peuvent être notamment choisis parmi les polyterpènes dispersables dans l'eau, les esters de glycérol de la résine de pin, les gommes laques, les lécithines, les huiles sicatives, l'alcool polyvinylique, la polyvinyle pyrrolidone, les polyacrylates de métaux alcalins, la gomme arabique.

Les agents peuvent en outre contenir des tensioactifs variés connus en soi.

La formulation finale des agents peut dépendre de la méthode utilisée pour son application sur les bulbes et tubercules et de la nature des produits traités. Elle peut être préparée par des méthodes connues en soi.

Lorsque les agents comprennent un sel acceptable sur le plan alimentaire, celui-ci peut être introduit dans les solutions lors de leurs préparations sous forme de sel ou sous forme neutre. Dans cette dernière hypothèse, le sel est formé *in situ* par addition d'une base appropriée, telle qu'un hydroxyde de métal alcalin (soude ou potasse).

Les quantités des agents devant être appliquées aux tubercules et bulbes dépendent essentiellement de la méthode d'application sélectionnée. En général, on applique au total, sur une période de 6 mois, de 20 à 30 g, de préférence de 25 à 28 g de CIPC par tonne de bulbes ou tubercules traités. Plus généralement, on ajuste la quantité appliquée de principe actif en fonction de la durée de stockage.

Les exemples suivants sont donnés à titre illustratif et non limitatif de la présente invention.

### EXEMPLE

L'efficacité du procédé selon l'invention dans le traitement antigerminatif de tubercules de pommes de terre a été évaluée de la façon suivante.

### 1. Formulation à 200 g/l de CIPC dans un mélange de solvants hydrosolubles, eau et agents mouillants organiques

Les applications sont réalisées par thermonébulisation à 180°C de la formulation à l'aide d'un appareil électrique (Electrofog XEDA) avec une première application 15 jours à 3 semaines après le remplissage de la cellule. Pour chaque date, des échantillons de tubercules, placés en sacs filets individuels, sont enfouis dans des caisses réparties dans la cellule de stockage de façon homogène. A la date choisie, ceux-ci en sont extraits pour être notés.

### 2. Solution d'eugénol à 646 g/l

Les applications sont réalisées par thermonébulisation à 240°C à l'aide de l'Electrofog XEDA. Pour chaque notation, des échantillons en sacs filets sont placés au centre des caisses parmi les tubercules de remplissage pour en être extraits aux dates souhaitées aux fins d'analyse.

### 3. Application successive de CIPC et d'eugénol

La solution d'eugénol précédente est appliquée 5 jours après l'application de CIPC précédente dans les conditions des essais 1 et 2 respectivement.

### 4. Témoin Non Traité

Pour chaque date de notation, des échantillons de tubercules non traités sont placés dans des sacs de papier kraft disposés dans des caisses palettes bien individualisées et conservées dans la cellule VCP. Cette cellule est gérée à la même température de consigne et les caisses y sont maintenues durant toute la période de conservation puis sont sorties pour les notations à la date voulue.

Les conditions d'application des formulations 1, 2, 3 et 4 sont résumées dans le tableau 1 suivant.

Les résultats obtenus démontrent une diminution très nette du nombre et de la taille des germes dans le cas de l'application successive de CIPC et d'eugénol, comparativement à l'application de l'un ou l'autre de ces agents seuls. Le procédé met donc en évidence une synergie de ces agents lorsqu'ils sont appliqués séparément.

| **Essai efficacité à 3 mois - Produits et doses appliqués** | | | | | | | | |
|---|---|---|---|---|---|---|---|---|
| **Condition** | **Matière active** | **Concentration** | **Dose** | **Dose matière active** | **Technique d'application** | **Dates d'application** | **Conditions expérimentales** | |
| | | | | | | | **T° du tas** | **Etat germination** |
| 1 | CIPC | 200 g/L | 60 ml/t | 12 ppm | Thermonébulisation à 180°C | 1^{er} traitement le 08/11 | 8,3°C | - |
| | | d=1,0 kg/l | puis 40 ml/t | puis 8 ppm | | 2^{e} traitement le 27/12 | 7,6°C | début point blanc |
| | | | Total = 100 ml/t | Total = 20 ppm | | | | |
| 2 | EUGENOL | 646 g/L | 65 ml/t | 42 ppm | Thermonébulisation à 240°C | 1^{er} traitement le 08/11 | 8°C | - |
| | | d = 1,076 kg/l | puis 3 x 23 ml/t | puis 15 ppm+ | | 2^{e} traitement le 29/11 | 7,6°C | début point blanc |
| | | | Total = 134 ml/t | 15 ppm+ | | 3^{e} traitement le 20/12 | 7,5°C | germes ≈ 5 mm |
| | | | | 15 ppm | | 4^{e} traitement le 11/01 | 7,6°C | germes > 5 mm |
| | | | | Total = 87 ppm | | | | |
| 3 | CIPC | 200 g/L | 60 ml/t | 12 ppm | Thermonébulisation à 180°C | 1^{er} traitement le 08/11 | 8,2°C | - |
| | | d=1,0 kg/l | puis 40 ml/t | puis 8 ppm | | 2^{e} traitement le 21/12 | 7,5°C | début point blanc |
| | | | Total = 100 ml/t | Total = 20 ppm | | | | |
| | | | | | | | | |
| | EUGENOL | 1076 g/l | 8,2 ml/t | 8,7 ppm | Thermonébulisation à 240°C | 1^{er} traitement le 08/11 | | - |
| | | | puis 5,2 ml/t | puis 5,5 ppm | | 2^{e} traitement le 21/12 | | début point blanc |
| | | | Total = 13,4 ml/t | Total = 14,2 ppm | | | | |
| 4 | Témoin | - | | - | - | - | - | - |

Les résultats sur les variétés Nicola sont résumés dans le tableau 2 suivant.

| **Efficacité antigerminative à 3 mois - Variété Nicola** | | | |
|---|---|---|---|
| **Condition** | **> 5 mm** | **> 2 mm** | **Poids germes** |
| 1 | 5.5 b | 13.0 c | 0.5 b |
| 2 | 71.7 a | 82.4 a | 60.2 a |
| 3 | 0.9 b | 6.3 c | 0.3 b |
| 4 | 35.3 a | 62.7 a | 10.7 a |
| Signification | HS | HS | S |
| C.V. (en %) | 63.6 | 34.6 | 152.0 |

| | | | |
|---|---|---|---|
| HS : hautement significatif ; S : significatif ; C.V. coefficient de variation. | | | |

Ces résultats montrent que le procédé selon l'invention permet d'obtenir de meilleurs résultats que le CIPC d'une part et l'eugénol d'autre part, ainsi que les effets additionnés de ces deux produits.

L'application successive met donc en évidence une synergie. Cet effet est vraisemblablement rendu possible par la capacité de l'eugénol à améliorer la pénétration du CIPC.

### EXEMPLE COMPARATIF

Les résultats décrits dans US 5,811,372 concernant l'application du CIPC et de la carvone seuls ou en combinaisons sont les suivants :
- le CIPC seul à une dose de 16,6 ppm permet d'obtenir 21, 52 ou 59% des lots traités de pommes de terre convenables à la vente ;
- la carvone seule à une dose de 16,6 ppm permet d'obtenir 0% des lots traités de pommes de terre convenables à la vente ;
- la combinaison de ces deux agents aux mêmes doses permet d'obtenir environ 55% des lots traités de pommes de terre convenables à la vente.

Par conséquent, l'utilisation de carvone avec le CIPC dans un rapport de 1 n'améliore pas significativement l'action du CIPC seul.

## Revendications

1. Procédé de traitement antigerminatif et/ou biocide des bulbes ou tubercules comprenant l'application séparée
- de CIPC et
- d'un terpène ou d'un sel de celui-ci ou huile terpénique, choisis parmi l'eugénol ou l'isoeugénol ou un de leurs sels ou mélange ou l'huile de girofle,
dans cet ordre ou inversement.

2. Procédé selon la revendication précédente, tel que le ClPC et/ou l'huile ou le terpène sont appliqués sous forme de solution.

3. Procédé selon la revendication 2 tel que la ou les solutions contien(nen)t un ou plusieurs émulsifiants .

4. Procédé selon la revendication 3, tel que ladite ou lesdites solution(s) contien(nen)t un émulsifiant non ionique.

5. Procédé selon la revendication 4 tel que ladite ou lesdites solution(s) contien(nen)t de 0 à 20 % en poids d'émulsifiant.

6. Procédé selon l'une quelconque des revendications précédentes tel que le CIPC et/ou le terpène ou huile terpénique est(sont) appliqué(s) par thermonébulisation.

7. Procédé selon la revendication 6 tel que l'application est réalisée à température comprise entre 180° et 350°C.

8. Procédé selon l'une quelconque des revendications précédentes pour le traitement antigerminatif des pommes de terre.

9. Procédé selon l'une quelconque des revendications précédentes tel que le CIPC est appliqué sous forme pure.

10. Procédé selon l'une quelconque des revendications précédentes tel que l'agent terpénique est appliqué après le CIPC.

11. Procédé selon l'une quelconque des revendications 1 à 9 tel que le CIPC est appliqué après l'agent terpénique.

12. Procédé selon l'une quelconque des revendications précédentes tel que l'application de l'agent terpénique ou du CIPC a lieu immédiatement après et jusqu'à 30 jours après celle du CIPC ou de l'agent terpénique ou vice-versa.

13. Procédé pour améliorer la pénétration du CIPC sur des bulbes ou tubercules, comprenant l'application d'un terpène et/ou huile terpénique, choisis parmi l'eugénol ou l'isoeugénol ou un de leurs sels ou mélange, ou l'huile de girofle, avant ou après celle du CIPC auxdits bulbes ou tubercules.

## Claims

1. Method of anti-germination and/or biocidal treatment for bulbs or tubers comprising the separate application of
- CIPC and
- a terpene or a salt thereof or terpene oil selected from among eugenol or isoeugenol or one of the salts thereof or a mixture thereof or oil of cloves,
in this order or in the reverse order.

2. Method according to the previous claim, wherein the CIPC and/or oil or terpene are applied in the form of a solution.

3. Method according to claim 2, wherein the solution(s) contain(s) one or more emulsifiers.

4. Method according to claim 3, wherein said solution(s) contain(s) a non-ionic emulsifier.

5. Method according to claim 4, wherein the solution(s) contain(s) 0 to 20% by weight of emulsifier.

6. Method according to any one of the preceding claims, wherein the CIPC and/or terpene or terpene oil is or are applied by thermonebulisation.

7. Method according to claim 6, wherein the application is carried out at a temperature between 180 and 350°C.

8. Method according to any one of the preceding claims for the anti-germination treatment of potatoes.

9. Method according to any one of the preceding claims, wherein the CIPC is applied in pure form.

10. Method according to any one of the preceding claims, wherein the terpene agent is applied after the CIPC.

11. Method according to any one of claims 1 to 9, wherein the CIPC is applied after the terpene agent.

12. Method according to any one of the preceding claims, such that the application of the terpene agent or CIPC takes place immediately after and up to 30 days after that of the CIPC or the terpene agent or *vice versa.*

13. Method for improving the penetration of CIPC into bulbs or tubers, comprising the application of a terpene and/or terpene oil, selected from among eugenol or isoeugenol or one of the salts or a mixture thereof, or oil of cloves, before or after that of CIPC to said bulbs or tubers.

## Patentansprüche

1. Verfahren zur keimungshemmenden- und/oder bioziden Behandlung von Zwiebeln oder Knollen, umfassend die getrennte Applikation von
- CIPC und
- einem Terpen oder einem Salz davon oder einem Terpenöl, ausgewählt aus Eugenol oder Isoeugenol oder einem ihrer Salze oder einer Mischung oder von Gewürznelkenöl
in dieser Reihenfolge oder in der inversen Reihenfolge.

2. Verfahren nach dem vorherigen Anspruch, **dadurch gekennzeichnet, dass** das CIPC und/oder das Öl oder das Terpen in der Form einer Lösung appliziert werden.

3. Verfahren nach Anspruch 2, **dadurch gekennzeichnet, dass** die Lösung(en) einen oder mehrere Emulgatoren enthalten.

4. Verfahren nach Anspruch 3, **dadurch gekennzeichnet, dass** die Lösung(en) einen nicht ionischen Emulgator enthalten.

5. Verfahren nach Anspruch 4, **dadurch gekennzeichnet, dass** die Lösung(en) 0 bis 20 Gew.-% des Emulgators enthalten.

6. Verfahren nach einem der vorherigen Ansprüche, **dadurch gekennzeichnet, dass** das CIPC und/oder das Terpen oder das Terpenöl durch Heißsprühen appliziert werden.

7. Verfahren nach Anspruch 6, **dadurch gekennzeichnet, dass** die Applikation durchgeführt wird bei einer Temperatur zwischen 180 und 350 °C.

8. Verfahren nach einem der vorherigen Ansprüche für die keimhemmende Behandlung von Kartoffeln.

9. Verfahren nach einem der vorherigen Ansprüche, **dadurch gekennzeichnet, dass** das CIPC in reiner Form appliziert wird.

10. Verfahren nach einem der vorherigen Ansprüche, **dadurch gekennzeichnet, dass** das terpenartige Mittel nach dem CIPC verabreicht wird.

11. Verfahren nach einem der Ansprüche 1 bis 9, **dadurch gekennzeichnet, dass** das CIPC nach dem terpenartigen Mittel appliziert wird.

12. Verfahren nach einem der vorherigen Ansprüche, **dadurch gekennzeichnet, dass** die Anwendung des terpenartigen Mittels oder des CIPC in einem Zeitraum nach und bis zu 30 Stunden nach Applikation des ClPC oder des terpenartigen Mittels oder umgekehrt stattfindet.

13. Verfahren zur Verbesserung der Penetration von CIPC in Zwiebeln oder Knollen, umfassend die Applikation eines Terpens und/oder eines Terpenöls, ausgewählt aus Eugenol oder Isoeugenol oder eines ihrer Salze oder Mischungen oder des Gewürznelkenöls vor oder nach derjenigen von CIPC auf die Knollen oder Zwiebeln.
